Europäisches Patentamt

(19) European Patent Office

Office européen des brevets

(11) Veröffentlichungsnummer : **0 062 188**
**B1**

(12) **EUROPÄISCHE PATENTSCHRIFT**

(45) Veröffentlichungstag der Patentschrift :
02.01.86

(21) Anmeldenummer : **82102179.7**

(22) Anmeldetag : **17.03.82**

(51) Int. Cl.$^4$ : **B 27 B 17/02**

(54) Anordnung zur Befestigung von Zusatzausrüstung an einer motorisch angetriebenen Kettensäge.

(30) Priorität : **26.03.81 NO 811032**

(43) Veröffentlichungstag der Anmeldung :
**13.10.82 Patentblatt 82/41**

(45) Bekanntmachung des Hinweises auf die Patenterteilung : **02.01.86 Patentblatt 86/01**

(84) Benannte Vertragsstaaten :
**AT BE CH DE FR GB IT LI LU NL SE**

(56) Entgegenhaltungen :
**EP-A- 0 058 291**
**CH-A- 383 610**
**DE-A- 1 403 683**
**DE-A- 2 454 050**
**DE-A- 2 849 992**
**FR-A- 1 384 843**
**US-A- 3 864 830**
**US-A- 4 146 962**
**US-A- 4 173 240**
**US-A- 4 244 104**

(73) Patentinhaber : **A/S Norcem**
**Section for Research and Development Haakon V11**
**gt., 2**
**Vika-Oslo 1 (NO)**

(72) Erfinder : **Pedersen, Nils**
**Grefsen allé 4a**
**N-Oslo 4 Norwegen (NO)**

(74) Vertreter : **Patentanwälte Grünecker, Dr. Kinkeldey,**
**Dr. Stockmair, Dr. Schumann, Jakob, Dr. Bezold,**
**Meister, Hilgers, Dr. Meyer-Plath**
**Maximilianstrasse 58**
**D-8000 München 22 (DE)**

## Beschreibung

Die vorliegende Erfindung bezieht sich auf eine Anordnung zur Befestigung von Zusatzausrüstung an einer ein Motorgehäuse sowie ein Kettenschwert aufweisenden motorgetriebenen Kettensäge nach dem Gattungsbegriff des Anspruch 1. Eine solche Anordnung ist aus US-A-3 864 830 bekannt.

Kettensägen, die von einem Verbrennungsmotor oder einem Elektromotor angetrieben sind, bestehen zusätzlich zum Motor hauptsächlich aus einer Rollkette, die auf einigen Gelenken der Kette, die auf einem Schwert laufen, mit scharfen Messern versehen ist. Das Schwert kann an seinem äusseren Ende mit einem Umlenkrad versehen sein. Ursprünglich wurden die Kettensägen für berufsmässigen Gebrauch beim Fällen und Bearbeiten von Bäumen im Wald entwickelt, und sie sind auf diesem Gebiet fast alleinherrschend geworden. In letzter Zeit haben kleinere und leichtere Bauarten auch bei gewöhnlichen Verbrauchern grossen Eingang gefunden, vor allem bei den Hütten- und Gartenbesitzern für Gebrauch beim Fällen und Roden von Bäumen und Büschen im Garten und auf Hüttengrundstücken. Ausserdem werden Kettensägen oft zum Zerlegen übriggebliebener Holzmaterialien in passende Längen benutzt, um in offenen Kaminen, Öfen oder Herden benutzt zu werden.

Obwohl solche Kettensägen zu vielen Zwecken sehr nützlich sind, hat es sich herausgestellt, dass sie viele ernsthafte Verletzungen sowohl bei Freizeitbenutzern als bei berufsmässigen Benutzern verursacht haben. Die Verletzungen rühren oft daher, dass der Benutzer mit dem Teil der Kette, der im Holzmaterial nicht tätig ist, meistens auf der Oberseite des Schwertes, in Berührung kommt.

Für das Zerlegen von Holzmaterialien, Ästen, Zweigen u. s. w. mit Hilfe einer Kettensäge, sind ein « Sägebock » mit einer rinnenförmigen Stütze für das Holzmaterial und eine an dem Ende der Rinne gelagerte Kettensäge entwickelt worden, die in einer Ebene ausserhalb des Endes der Rinne geschwenkt werden kann. Die Anordnung ist einer bestimmten Kettensäge angepasst, deren Motorgehäuse mit einer Halterung zur schwenkbaren Lagerung der Kette auf dem Sägebock ausgebildet ist.

Eine solche schwenkbare Lagerung der Säge auf einem Sägebock gibt indessen eine gute und sichere Führung der Säge und erlaubt Bedienung der Säge mit einer Hand, so dass die andere zum Festhalten der Holzmaterialien in der Rinne benutzt werden kann. Auch beim Sägen von einem Baumstamm oder anderen Holzmaterialien der Länge nach, wäre es wünschenswert eine sichere Führung der Säge vorsehen zu können.

Der vorliegenden Erfindung liegt die Aufgabe zugrunde, eine Anordnung zu schaffen, die eine einfache Befestigung von Zusatzausrüstungen an jeder gewöhnlichen Kettensäge gestattet ohne irgendwelche Anpassung von dieser. Beispiele von solchen Zusatzausrüstungen sind Schutzdeckel, ein die Säge tragender Sägebock für das Abschneiden von Holzmaterialien und Führungsmittel, die eine Führung von dem Schwert der Säge in einer im voraus festgelegten Ebene bei anderen Sägevorgängen, zum Beispiel beim Spalten von Baumstämmen gestattet.

Diese Aufgabe wird bei einer Anordnung nach dem Gattungsbegriff des Anspruch 1 durch die Merkmale des Kennzeichens des Anspruch 1 gelöst. Der Beschlag kann zum Beispiel zwei Teile aufweisen, die dazu eingerichtet sind jeweils auf entgegengesetzten Seiten des Schwertes zu liegen und an demselben mittels zwei Bolzen, die sich ausserhalb der Sägekette erstrecken, festgeklemmt zu werden. Die mit den Bolzen zusammenwirkenden Abschnitte der beiden Teile müssen selbstverständlich mit Aussparungen für das Hindurchlaufen der Sägekette versehen sein. Ein solcher Beschlag kann an jedes Schwert, ohne Rücksicht auf dessen Länge und auf die Form des Motorgehäuses, festgeklemmt werden.

Auf einem solchen Beschlag kann zum Beispiel ein Schutzdeckel gelagert werden. Der Deckel kann an demjenigen der Befestigungsbolzen, der beim oberen Rand des Schwertes liegt, schwenkbar gelagert sein. Ein solcher Deckel wird gegen unabsichtliche Berührung der Sägekette sowohl von der Seite als von oben schützen, wobei der Deckel zurückgeschwenkt wird, sobald die Säge sich in das Holzmaterial einarbeitet, so dass er kein Hindernis für eine normale Benutzung der Säge ausmacht. Eine Feder kann den Deckel in einer Schutzlage halten, in der er die ganze Kette deckt, wobei die Ausschwenkung des Deckels beim Sägen gegen die Wirkung der Feder stattfindet.

Der Beschlag enthält ausserdem vorzugsweise Organe für schwenkbare Lagerung des Beschlages und damit der Säge auf Zusatzausrüstung. Diese Organe können eine Verlängerung von demjenigen der beiden Befestigungsbolzen, der beim unteren Rand des Schwertes liegt, umfassen. Am Ende der Verlängerung kann passend ein Querloch für Einsetzen eines Splintes angeordnet sein, wodurch die Säge gegen Bewegung quer zur Schwenkebene verriegelt ist, wenn die Verlängerung in geeigneten Lagern in der Zusatzausrüstung eingeschoben ist. Die Zusatzausrüstung kann zum Beispiel eine rinnenförmige Stütze für Holzmaterialien aufweisen, die abgeschnitten werden sollen, wobei der Beschlag und damit das Schwert in einer Ebene ausserhalb dem Ende der Rinne schwenkbar sind. Auf diese Weise erhält man einen Sägebock für das Schneiden von Holzmaterialien, auf den jede gewöhnliche Kettensäge montiert werden kann.

Weiter kann die Zusatzausrüstung einen Führungsschlitten aufweisen, der zum Anlegen an eine Führung ausgebildet ist und an dieser entlang geführt sein kann. Auf diese Weise erhält man eine sehr einfache Führungsanordnung für die Führung des Schwertes in einer festgelegten Ebene. Dies ist insbesondere beim Spalten oder Zurichten von Stöcken in längsrichtung zweckmässig. Die Führung kann eine Holzleiste sein, die am Stock befestig wird. Beim Vorspeisen der Säge der List entlang wird die Säge hin und zurück um die Schwenklagerung am Führungsschlitten gekippt.

Weitere Merkmale und Vorteile der vorliegenden Erfindung gehen aus der folgenden Beschreibung unter Bezugnahme auf die Zeichnung hervor, die eine Ausführungsform eines Beschlages zur Befestigung eines Schutzdeckels und zum Montieren der Säge an einem Sägebock für Querschneiden sowie an einem Führungsschlitten für Spalten darstellt.

Figur 1 zeigt im Aufriss einen Ausschnitt eines Schwertes für eine Motorsäge mit montiertem Beschlag.

Figur 2 zeigt einen Schnitt nach der Linie II-II in Fig. 1.

Figur 3 zeigt einen am Beschlag schwenkbar gelagerten Schutzdeckel.

Figur 4 zeigt einen Schnitt nach der Linie IV-IV in Fig. 3.

Figur 5 und 6 zeigen im Aufriss bzw. Grundriss das eine Ende eines Sägebockes mit rinnenförmiger Stütze für Holzmaterialien, die abgeschnitten werden sollen, und mit einer am Ende der Rinne montierten Kettensäge.

Figur 7 ist eine stark schematische Perspektivdarstellung eines Ausschnittes einer Motorsäge mit einem Beschlag, der auf einem Führungsschlitten schwenkbar gelagert ist.

Figur 8 veranschaulicht die Verwendung des Führungsschlittens nach Fig. 7 in Verbindung mit dem Spalten eines Baumstammes.

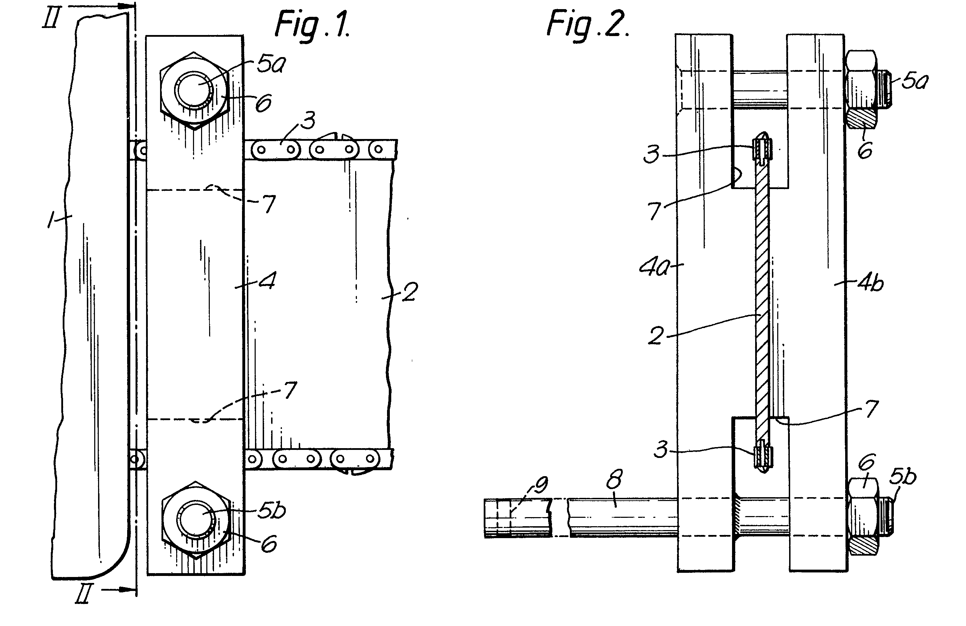

Es ist in Fig. 1 ein Ausschnitt einer Motorsäge mit einem Motorgehäuse 1 und einem Schwert 2 gezeigt, an dessen Rand entlang eine umlaufende Sägekette 3 geführt ist, die vom Motor angetrieben wird. Am Schwert 2 ist ein Beschlag 4 festgeklemmt, der aus zwei Teilen 4a und 4b besteht, die auf je einer Seite des Schwertes 2 liegen und an diesem mittels Befestigungsbolzen 5a und 5b festgeklemmt werden. Jeder Befestigungsbolzen kann einen Kopf aufweisen, der in dem einen Teil 4a des Beschlages 4 versenkt ist, können aber auch, wie in der Zeichnung dargestellt, in dem genannten einen Teil 4a festgeschweisst sein. Die Teile 4a und 4b werden mit Hilfe von Muttern 6 gegen einander verspannt. Statt Bolzen mit Muttern 6, können auch Kopfschrauben benutzt werden, die in ein Muttergewinde im Teil 4a eingeschraubt werden. Um Platz für die Kette 3 zu geben sind, wie gezeigt, die dem Schwert 2 zugekehrten Flächen der Teile 4a und 4b an den Rändern des Schwertes mit Aussparungen 7 versehen. Die an das Schwert 2 anliegenden Flächen der Teile 4a und 4b sollten derart ausgeführt sein, dass sie gute Reibung gegen das Schwert ergeben. Zum Beispiel können sie mit einem Reibungsmittel belegt oder feilenartig kreuzgeriefelt sein. Es ist auch möglich die Fläche mit einem oder mehreren Zapfen zu versehen, die in entsprechende Löcher im Schwert einpassen, um auf diese Weise zu verhindern, dass der Beschlag sich an den Schwert unabsichtlich bewegt, falls die Muttern 6 nicht hart genug angezogen werden.

Wie in Fig. 2 gezeigt, kann der untere Bolzen 5b durch den Teil 4a hindurch auf der entgegengesetzten Seite der Mutter 6 verlängert sein. Diese Verlängerung 8 bildet einen Lagerzapfen zur schwenkbaren Lagerung des Beschlages an verschiedentlichen Zusatzausrüstungen. Am Ende der Verlängerung 8 ist eine Querbohrung 9 für das Einsetzen eines Splintes vorgesehen, so dass der Beschlag an der Zusatzausrüstung verriegelt wird.

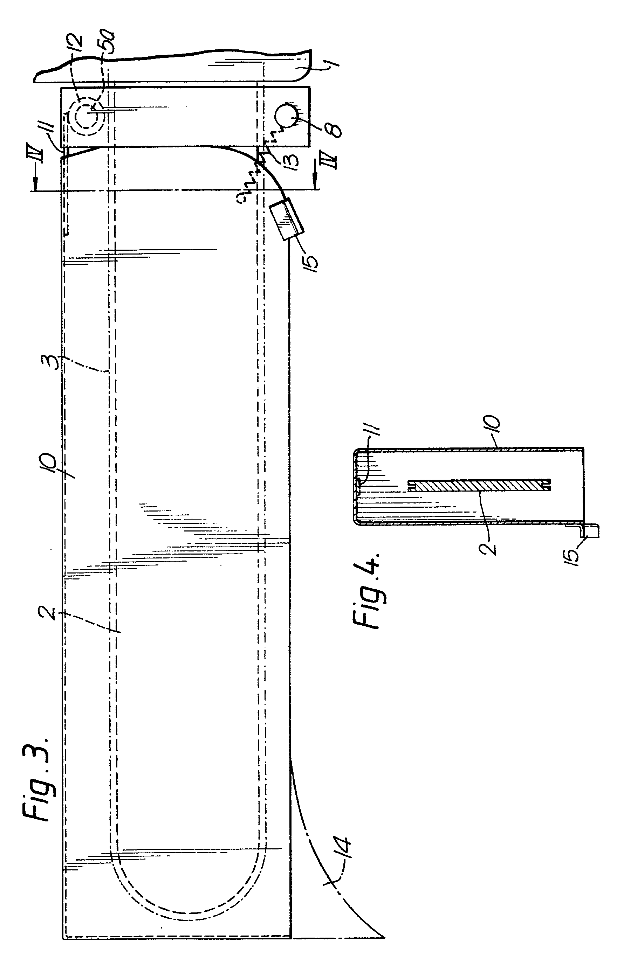

In Fig. 3 ist ein Schutzdeckel 10 mit U-Querschnitt gezeigt (vgl. Fig. 4), der über eine Befestigungsplatte 11 mit einer Lagerhülse 12 verbunden ist, die auf den Bolzen 5a zwischen den Beschlagteilen 4a und 4b eingesetzt werden kann. Der Deckel 10 ist gegen die in Fig. 3 dargestellte Schutzlage mit Hilfe einer Feder 13 federbelastet, die zwischen dem Beschlag 4 und dem Deckel 10 wirkt. Wenn die Unterseite des Deckels gegen einen abzuschneidenden Baumstamm zum Anliegen kommt, wird der Deckel um den Bolzen 5a gegen die Wirkung der Feder 13 aufgeschwenkt, so dass die Unterseite der Kette 3 sich in den Baumstamm einsägen kann. Um einen zusätzlichen Schutz der Spitze des Schwertes zu schaffen, wenn der Schutzdeckel für Sägen zurückgedrückt wird, kann das äussere Ende des Deckels an seinem offenen, unteren Rand mit einem ausragenden Abschnitt 14, wie in Fig. 3 gestrichelt angedeutet, ausgebildet sein.

Der Deckel 10 trägt weiter an seinem inneren Ende eine kurzen winkelförmigen oder hakenförmigen Anschlag 15, dessen Funktion später näher beschrieben wird.

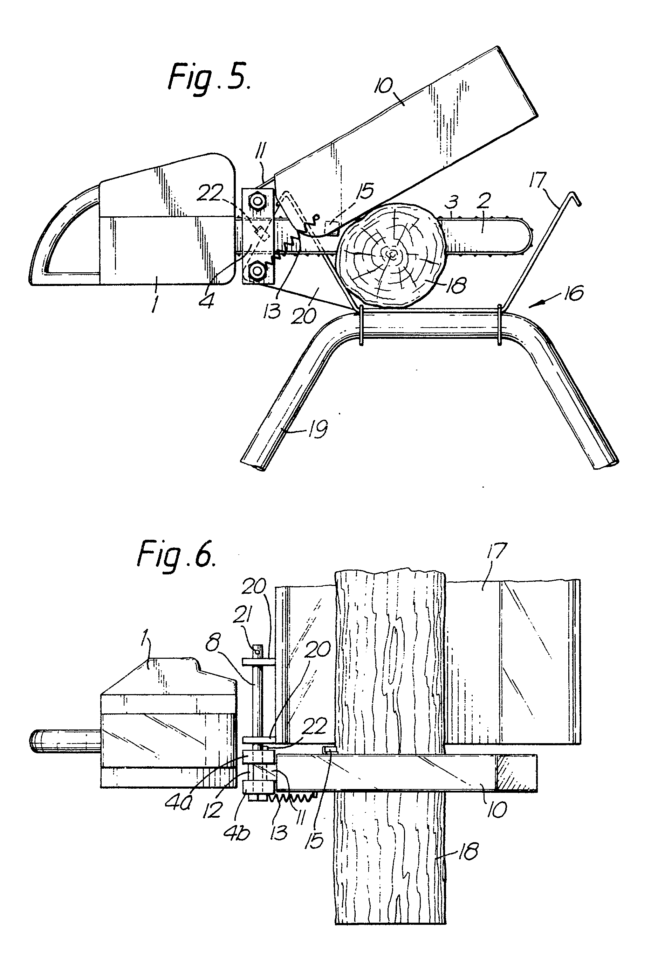

Fig. 5 und 6 zeigen die Motorsäge auf einem Sägebock 16 aufgesetzt, der zum Beispiel aus einer rinnenförmigen Stütze 17 für abzuschneidende Baumstämme 18 und dergleichen und geeigneten Beinen, um die Rinne 17 in der gewünschten Arbeitshöhe zu halten, bestehen kann. Die Beine können zum Beispiel aus zwei Bügeln bestehen, einem an jedem Ende der Rinne 17. Wenn erwünscht, können diese Beine einklappbar sein.

Auf der Aussenseite des einen Endes der Rinne 17 sind zwei Versteifungs- und Lagerplatten 20 mit Löchern in welche die Bolzenverlängerung 8 eingeschoben werden kann, festgeschweisst. Ein Splint 21 verriegelt die Verlängerung 8 schwenkbar in den Platten 20. Damit wird die Motorsäge quer zur Rinne 17 schwenkbar, wobei das Schwert sich in einer Ebene ausserhalb des Endes der Rinne bewegt, um ein herausragendes Stück des Baumstammes 18 abzuschneiden. Diese Schwenkung der Motorsäge kann mit einer Hand vorgenommen werden, wobei die andere zum Festhalten des Baumstammes 18 in der Rinne 17 frei bleibt. Der Schutzdeckel 10 wird in diesem Zusammenhang genau in derselben Weise wirken, wie beim Fällen oder Abschneiden von Baumstämmen auf dem Boden.

Wenn nicht geschnitten wird, wird die Säge infolge des Gewichtes des Motors in angenähert senkrechte Lage hinaufgekippt, wobei der Schwert 2 gerade nach oben gerichtet wird. Insbesondere in dieser Lage ist der Schutzdeckel von grosser Bedeutung. Um zu verhindern, dass der Schutzdeckel 10 in dieser Lage der Säge bei Berührung zurückgeschwenkt werden kann, kann auf dem Sägebock ein Anschlag 22 vorgesehen sein, der mit dem Anschlag 15 am Schutzdeckel 10 zusammenwirkt. Wenn das Motorgehäuse 1 gehoben und das Schwert für Abschneiden nach unten geschwenkt wird, wird der Anschlag 22 den Anschlag 15 freigeben und eine Zurückfederung des Deckels 10 gestatten.

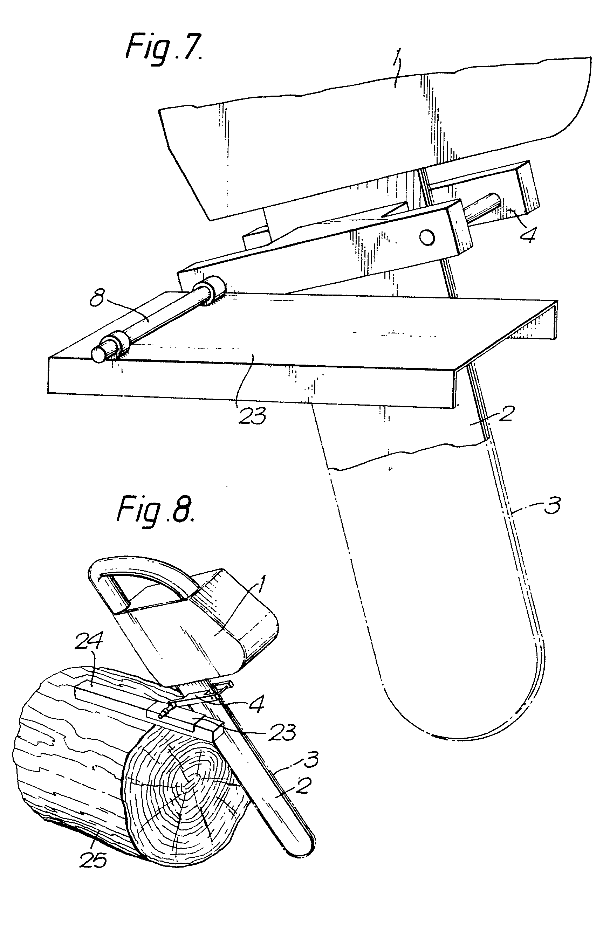

In Fig. 7 ist es dargestellt wie die Motorsäge mittels der Verlängerung 18 am Beschlag 4 an einem U-förmigen Schlitten 23 schwenkbar befestigt werden kann, und Fig. 8 zeigt wie dieser Schlitten 23 zur Führung der Säge längs einer Führungsleiste 24 benutzt werden kann, die zum Beispiel an einem Baumstamm 25 festgenagelt sein mag. Auf diese Weise erhält man eine gute Führung des Schwertes 2 in einer bestimmten Ebene, so dass man mit wesentlich höherer Genauigkeit den Stamm 25 spalten kann. Ein solches Spalten wird selbstverständlich in der bei Verwendung einer Motorsäge üblichen Weise ausgeführt, und zwar durch Schwenkung der Säge um die Lagerung im Schlitten 23, so dass die ganze Länge des Schwertes nicht gleichzeitig arbeitet. Man wird auf diese Weise wechselweise den Schlitten mit der Säge an der Führungsleiste 24 entlang hervorschieben und sodann die Säge aufrichten. Diese Arbeitsweise ist einfach und ermöglicht ohne grosse Mühe ein Spalten des Stammes in wirkungsvoller und zweckmässiger Weise. Es besteht selbstverständlich auch in diesem Fall die Möglichkeit den Schutzdeckel am Beschlag zu befestigen.

Da der Beschlag 4 völlig symmetrisch ist, kann er gekehrt werden, so dass die Verlängerung 8 auf der linken bzw. rechten Seite des Schwertes ausragt. Es ist zweckmässig bei der Montage der Säge am Sägebock 16 die Verlängerung 8 auf der linken Seite des Schwertes (wie in der Zeichnung dargestellt) ausragen zu lassen, während es bei Verwendung des Führungsschlittens 23 vorteilhaft sein kann die Verlängerung auf der rechten Seite des Schwertes zu verlegen.

## Patentansprüche

1. Anordnung zur Befestigung von Zusatzausrüstungen an einer ein Motorgehäuse (1) sowie ein Kettenschwert (2) aufweisenden motorgetriebenen Kettensäge, wobei die Zusatzausrüstung in der Nähe des Motorgehäuses am Kettenschwert mit Hilfe eines am Kettenschwert festklemmbaren Beschlages (4) befestigbar ist, welcher einen senkrecht zur Hauptebene des Kettenschwertes verlaufenden Achszapfen (8) umfaßt, der zum Verschwenken von Beschlag und Säge relativ zur Zusatzausrüstung dient, dadurch gekennzeichnet, daß der Beschlag (4) zwei an den Flachseiten des Kettenschwertes (2) anliegende Teile (4a, 4b) aufweist, daß diese beiden Teile (4a, 4b) mit Hilfe eines oberhalb des Kettenschwertes verlaufenden ersten Schraubbolzens (5a) sowie eines unterhalb des Kettenschwertes verlaufenden zweiten Schraubbolzens (5b) miteinander verbunden und am Kettenschwert (2) festgeklemmt sind und daß an diesen Schraubbolzen die Zusatzausrüstungen (10, 17) befestigbar sind.

2. Anordnung nach Anspruch 1, dadurch gekennzeichnet, daß am Beschlag (4) ein Schutzdeckel (10) als Zusatzausrüstung schwenkbar gelagert ist.

3. Anordnung nach Anspruch 2, dadurch gekennzeichnet, daß der Deckel (10) am oberhalb des Kettenschwertes (2) angeordneten Schraubbolzens (5a) befestigt ist.

4. Anordnung nach Anspruch 2 oder 3, dadurch gekennzeichnet, daß das äußere Ende des Deckels (10) an seinem offenen Rand mit einem vorstehenden Abschnitt (14) versehen ist, mit dessen Hilfe die Spitze des Kettenschwertes (2) auch bei lediglich teilweisem Öffnen des Deckels abdeckbar ist.

5. Anordnung nach einem der vorhergehenden Ansprüche, dadurch gekennzeichnet, daß der unterhalb des Kettenschwertes (2) angeordnete Schraubbolzen (5b) zur Bildung des Achszapfens (8) verlängert ist.

6. Anordnung nach einem der vorhergehenden Ansprüche, dadurch gekennzeichnet, daß am Achszapfen (8) eine Stütze (17) für langgestreckte abzuschneidende Holzmaterialien als Zusatzausrüstung schwenkbar gelagert ist, wobei der Beschlag (4) und damit das Kettenschwert (2) in einer Ebene quer zur Stütze (17) schwenkbar sind.

7. Anordnung nach einem der Ansprüche 2 bis 4 und nach Anspruch 6, dadurch gekennzeichnet, daß am Deckel (10) Sperrorgane (15) vorgesehen sind, welche beim Verschwenken der Motorsäge mit an der Stütze (17) vorgesehenen Sperrorganen (22) in Eingriff gelangen, so daß der Deckel (10) in verschwenkter Lage der Motorsäge gegen Zurückschwenkung zur Freilegung der Sägekette gesperrt ist.

## Claims

1. An arrangement for affixing accessory equipment to a motorized chain saw comprising a motor housing (1) and a chain sword (2), said accessory equipment to be secured to said chain sword adjacent said motor housing by means of a fitting (4) adapted to be clamped to said chain sword and including an axle bolt (8) extending perpendicular to the main plane of said chain sword and permitting said fitting and said saw to be pivoted relative to said accessory equipment,

4

characterized in that said fitting (4) comprises two members (4a, 4b) engaging the flat sides of said chain sword (2), in that these two members (4a, 4b) are interconnected and clamped to said chain sword (2) by means of a first threaded bolt (5a) passing above said chain sword and a second threaded bolt (5b) passing below said chain sword, and that said threaded bolts are adapted to have said accessory equipment (10, 17) secured thereto.

2. An arrangement according to claim 1, characterized in that a protective cover (10) is pivotally mounted on said fitting (4) as said accessory equipment.

3. An arrangement according to claim 2, characterized in that said cover (10) is secured to the threaded bolt (5a) disposed above said chain sword (2).

4. An arrangement according to claim 2 or 3, characterized in that the outer end of said cover (10) has its open edge provided with a projecting portion (14) by means of which the tip of said chain sword (2) is adapted to be covered in a merely partially opened state of said cover.

5. An arrangement according to any of the preceding claims, characterized in that the threaded bolt (5b) disposed below said chain sword (2) is extended to form said axle bolt (8).

6. An arrangement according to any of the preceding claims, characterised in that said axle bolt (8) pivotally supports a support (17) for elongate wooden materials to be cut off, said support constituting said accessory equipment, said fitting (4) and thus said chain sword (2) being adapted to be pivoted in a plane transverse of said support (17).

7. An arrangement according to any of claims 2 to 4 and to claim 6, characterized in that said cover (10) is provided with detent elements (15) adapted on pivoting said motor saw to engage detent elements (22) provided on said support (17), so that in the pivoted position of said motor saw said cover (10) is prevented from pivoting back to thereby uncover the saw chain.

**Revendications**

1. Dispositif pour la fixation d'accessoires sur une scie à chaîne motorisée comportant un carter de moteur (1) ainsi qu'un support de chaîne (2), l'accessoire pouvant être fixé sur le support de chaîne, à proximité du carter de moteur, à l'aide d'une ferrure (4) apte à être bloquée sur le support de chaîne et comprenant un tourillon (8) qui s'étend perpendiculairement au plan principal du support de chaîne et qui permet un basculement de la ferrure et de la scie par rapport à l'accessoire, caractérisé en ce que la ferrure (4) comporte deux pièces (4a, 4b) s'appliquant contre les faces planes du support de chaîne (2), en ce que ces deux pièces (4a, 4b) sont réunies l'une à l'autre au moyen d'un premier boulon fileté (5a) s'étendant au-dessus du support de chaîne et d'un second boulon fileté (5b) situé au-dessous du support de chaîne et sont bloquées contre le support de chaîne (2) et en ce que les accessoires (10, 17) peuvent être fixés à ces boulons filetés.

2. Dispositif selon la revendication 1, caractérisé en ce qu'un capot de protection (10) est monté à pivotement, en tant qu'accessoire, sur la ferrure (4).

3. Dispositif selon la revendication 2, caractérisé en ce que le capot (10) est fixé au boulon fileté (5a) disposé au-dessus du support de chaîne (2).

4. Dispositif selon la revendication 2 ou 3, caractérisé en ce que, sur son bord ouvert, l'extrémité extérieure du capot (10) est pourvue d'une partie saillante (14) grâce à laquelle la pointe du support de chaîne (2) peut être recouverte même dans le cas où le capot est seulement ouvert partiellement.

5. Dispositif selon l'une des revendications précédentes, caractérisé en ce que le boulon fileté (5b) disposé au-dessous du support de chaîne (2) présente un prolongement formant le tourillon (8).

6. Dispositif selon l'une des revendications précédentes, caractérisé en ce qu'un support (17) pour des pièces de bois à couper de grande longueur, est monté à pivotement, en tant qu'accessoire, sur le tourillon (8), la ferrure (4) et par suite le support de chaîne (2) pouvant pivoter dans un plan transversal au support (17).

7. Dispositif selon l'une des revendications 2 à 4 et selon la revendication 6, caractérisé en ce que le capot (10) est pourvu d'organes d'arrêt (15) qui, lors du basculement de la scie motorisée, viennent en prise avec des organes d'arrêt (22) prévus sur le support (17) pour que le capot (10), dans la position basculée de la scie motorisée, soit immobilisé contre tout pivotement vers l'arrière, afin de maintenir la chaîne de la scie découverte.

*Fig .1.*

*Fig .2.*

0 062 188

Fig. 3.

Fig. 4.

0 062 188

Fig .5.

Fig .6.

3

**Fig .7.**

**Fig .8.**